# EUROPEAN PATENT APPLICATION

(11) **EP 3 459 360 A1**
(43) Date of publication of application: **27.03.2019**
(21) Application number: 18190424.4
(22) Date of filing: 23.08.2018
(51) Int. Cl.: A23L 2/38, A21D 2/38, C12C 1/047, A23L 5/30, A23L 7/10, A23L 7/152, A23L 7/20, A23L 13/40

(54) **A METHOD FOR PRODUCING A PASTE WITH A HIGH CONTENT OF NUTRIENTS FROM GERMINATED GRAIN**

(30) Priority: 23.09.2017 PL 42293417
(71) Applicant: Centrum Badawczo-Rozwojowe GLOKOR Sp. z o.o., 44-100 Gliwice (PL)
(72) Inventor: Juszczynski, Jan, 44-113 Gliwice (PL); Kurasz, Ewelina, 40-114 Katowice (PL); Belyavskiy, Vadim, 40-114 Katowice (PL)
(74) Representative: Kancelaria Eupatent.pl Sp. z.o.o

(57) **Abstract**

A method for producing a paste from a germinated grain, characterised in that the method comprises the steps of: washing a grain with washing agents produced in situ, activating the grain in a stratification process carried out in a variable magnetic field, soaking the grain in water, subjecting the grain to a germinating process carried out in cycles, wherein the cycle comprises germinating the grain at rest on a mesh and soaking the grain, to obtain the germinated grain, and grinding the germinated grain with at least one additive selected form the group consisting of flavouring agents and rheology-enhancing agents, to obtain the paste.

## Description

### TECHNICAL FIELD

The invention relates to a method for producing a paste with a high content of nutrients from germinated grain.

### BACKGROUND

Many methods are known that enable the modification of nutritional properties of food by adding vitamins, amino acids, peptides or proteins. Ready-made additives in the form of a stable mixture of vitamins and amino acids are usually used. This solution, however, has certain drawbacks, such as the low biological and nutritional value of additives produced in chemical processes, the high price or the presence of undesirable impurities.

Flour or dough doping is known through the addition of grain sprouts, germinated grain or extracts of grain sprouts or germinated grain. The disadvantage of this solution is low biological and nutritional value of dried germinated grain.

A patent publication FR2594002 discloses a method of making a baking additive comprising germinated grain. Non-disinfection of grain makes it impossible to achieve the necessary microbiological quality of food products and results in poor quality and stability of the process. Lack of grain grinding results in poorer absorbability of nutrients.

A patent publication US2012263824 discloses a method for producing a baking mix, comprising a cereal grain germination step (10-40 h), as well as steam cooking, grinding, crushing and extrusion of germinated grain. This results in the inactivation of all enzymes, the optimal level of vitamins and enzymes is not achieved.

Furthermore, a patent publication WO2005112553 discloses a method for producing a cereal concentrate, which comprises the steps of: cleaning, washing, germinating cereal grain, drying, grinding and granulation. The optimal level of vitamins and enzymes is not achieved due to the short germination time of the grain. The formation of granules using elevated pressure causes inactivation of enzymes and reduces the vitamin content.

Furthermore, patent publications DE2166865 and DE2352306 disclose a method for producing germinated grain comprising the steps of: cleaning, washing, and germination of cereal grain. The optimal level of vitamins and enzymes is not achieved due to the short germination time of the grain. Heating to temperatures above 40°C further reduces enzyme activity.

Furthermore, a patent publication DE2540255 discloses a method for producing a bread additive containing flour made of germinated grain. Grain is germinated for a very long time, which reduces the vitamin content.

Furthermore, patent publications US2015320092, FR2161947 and EP0389755 disclose a method for processing the grain in order to improve the nutritional value of food, which comprises the steps of: disinfection, germination of cereal grain, drying and cooling. No grain grinding results in poorer absorbability of nutrients. Drying sprouts inactivates enzymes and reduces the vitamin content. Drying is energy-consuming.

Furthermore, patent publications US2016205951 and US2627464 disclose a method for producing germinated grain, which comprises the steps of germinating cereal grain, drying and cooling. No grain grinding results in poorer absorbability of nutrients. Drying sprouts with hot air inactivates enzymes and reduces the vitamin content. Drying is energy-consuming.

Furthermore, a patent publication US6120808 discloses a method for producing flour which comprises the steps of: washing, germinating cereal grain, drying and grinding. Drying sprouts with hot air inactivates enzymes and reduces the vitamin content. Drying is energy-consuming.

Furthermore, a patent publication DE2527945 discloses a method for producing food having protective properties in the grain germination process. Nutrients (vitamins, polyphenols) are stabilised in the process of reversible enzyme inactivation. Inactivation is achieved by the addition of natural acids, e.g. lemon juice. The drying and germination in the method according to the invention is carried out on meshes.

A patent publication MX2013012618 discloses a method for producing fermented food in which the grain mixture is germinated and the sprouts are cooked. Cooking sprouts reduces the content of vitamins and enzymes contained in the product.

Furthermore, whole grain products are known that contain bran or bruised grain. The disadvantage of such products is the low biological and nutritional value of non-germinated ground whole grains, as well as poor taste qualities.

In the methods known hitherto, germinated grain is a small additive by weight.

A patent publication PL414094 discloses a method for producing a slimming preparation. The preparation contains only wheat sprout bran. The product is enriched with vitamins and nutrients only to a very small extent.

A patent publication PL413553 discloses a method for producing a stock. The preparation contains only green barley sprouts in an amount of 2 to 5%. Green barley sprouts do not contain the optimal quantity of vitamins. The product is enriched with vitamins and nutrients only to a very small extent.

Products are known with altered nutritional value, for example with altered starch content. The disadvantage of this solution is undesirable change of taste and rheology of finished products.

A patent publication RU2595165 discloses a method of producing a fish stuffing additive from germinated grain powder. The addition of germinated grain powder improves the rheology of fish stuffing.

Methods are known for obtaining germinated cereal using the technology of malt production. The disadvantage of this solution is the lengthy production process (typically of over 96 hours), as well as other target process parameters (for example obtaining the maximum amount of sugars rather than the maximum amount of vitamins and amino acids).

A patent publication US4380551 discloses a method for producing food by grain malting. Peat substrate is used for malting grain. The use of peat substrate makes it impossible to achieve the necessary microbiological quality of food products.

A patent publication US2006280851 discloses antioxidants and aromas obtained from roasted wheat malt. Wheat malt has a different nutrient content than germinated grain. Roasting malt causes a loss of a large amount of enzymes and vitamins.

Methods for obtaining germinated cereal using the technology dedicated to improving nutritional value are known. Some of the processes used are known from malt production technology. The processes have been modified for obtaining the highest nutritional value, microbiological quality of products and stability of the germination process.

A patent publication RU2177831 discloses a method for producing a baking mix, a set of equipment and a cereal mill that comprises cleaning the grain with running water, grain germination and grain crushing. Grain is dehusked, grain germination is carried out in water with air fed, germination time of wheat grain is up to 36 hours, the grain mill has at least two levels of grinding. The optimal level of vitamins and enzymes is not achieved due to the short germination time of the grain. Non-disinfection of grain makes it impossible to achieve the necessary microbiological quality of food products and results in poor quality and stability of the process. Dehusking of the grain increases the amount of non-germinating grain and reduces the quality of the paste. Carrying out the germination process in water causes high paste moisture.

A patent publication RU2583612 discloses a method for producing bread from germinated grain aerated with compressed air. The use of compressed air containing oxygen causes the oxidation of active compounds and thus reduces the vitamin content.

A patent publication RU2617352 discloses a method for producing bread from germinated cereal grains, in which the grain is washed, soaked in water with the addition of hydrogen peroxide, germinated and ground. The other ingredients are then added. The optimal level of vitamins and enzymes is not achieved due to the short germination time of the grain. Grain disinfection with hydrogen peroxide alone does not allow for achieving the necessary microbiological quality of food products and results in poor quality and stability of the process. Carrying out the germination process in water causes high paste moisture.

Methods are known of grain pre-treatment, for example washing, soaking, grain disinfection. This solution has the disadvantages of the long duration of the process (typically of over 18 hours), the use of hazardous substances, as well as high water consumption.

A patent publication RU2627560 discloses a method for producing dough from hydrolysed germinated wheat grain. The optimal level of vitamins and enzymes is not achieved due to the short germination time of the grain. Non-disinfection of grain makes it impossible to achieve the necessary microbiological quality of food products and results in poor quality and stability of the process. Carrying out the germination process in water causes high paste moisture. The use of hydrodynamic processing methods in a pulse cavitation device at a high rotational speed, with the grain:water ratio of 1:1 results in poor quality and process instability.

A patent publication RU2606029 discloses a method for producing malt from a mix of barley and wheat grains, in which the grain is washed, soaked in anolyte for 3.5-4.5 hours, re-washed and germinated. During germination, the grain is rotated, the germination process takes from 96 to 120 h. The germinated grain is dried. Rotating the grain slows down the germination process, long germination time causes a decrease in the content of vitamins and enzymes. Drying grain also causes a decrease in the content of vitamins and enzymes.

Also, a utility model publication PL124174 discloses a sprouter in a tray. The sprouter does not allow for obtaining higher yields.

A patent publication PL413181 discloses a method for preparing a base for vegetable meat substitute, in which vitamins from the solution are absorbed by grains/seeds during the germination process. Non-disinfection of grain and addition of nutrients in the germination process makes it impossible to achieve the necessary microbiological quality of food products and results in poor quality and stability of the process.

Also, a patent publication PL406353 discloses a method for producing a food mix from plant sprouts that contains organic selenium compounds, in which grains to be germinated are soaked in a solution of sodium selenate (IV). After soaking, grain is grown in sprouters, and then dried or lyophilised. Ready-made additives are used to modify the nutritional properties of food. Growing sprouts in sprouters reduces the efficiency of the process.

A patent publication RU2599569 discloses a method for producing functional food from germinated grain in which the grain is germinated in water. The water is exposed to a magnetic field of 18 mTI. The germinated grain is roasted. Carrying out the germination process in water causes high paste moisture. The use of a magnetic field accelerates the germination process.

It would therefore be expedient to improve the process for producing a paste from germinated grain in order to obtain an optimal product and an optimal process of production thereof. An optimal product means the highest possible nutritional value, with the highest possible content of vitamins and amino acids as well as enzyme activity, within a specific value range of the microbiological quality and humidity parameter. Also, the production process should be optimized for achieving maximum process stability and a strictly determined duration.

### SUMMARY

There is presented a method for producing a paste from a germinated grain, characterised in that the method comprises the steps of: washing a grain with washing agents produced in situ, activating the grain in a stratification process carried out in a variable magnetic field, soaking the grain in water, subjecting the grain to a germinating process carried out in cycles, wherein the cycle comprises germinating the grain at rest on a mesh and soaking the grain, to obtain the germinated grain, and grinding the germinated grain with at least one additive selected form the group consisting of flavouring agents and rheology-enhancing agents, to obtain the paste.

Preferably, the method further comprising drying the paste, preferably using pulse drying.

Preferably, the washing agents produced in situ undergo decomposition to neutral compounds.

Preferably, the method further comprising, during the washing process, rinsing the grain with an anolyte being a biocidal agent, and next soaking the grain in a catholite being a husk-softening solution.

Preferably, the stratification process is carried out for 0.1 to 7 s in a variable magnetic field with a frequency in the range of 25-70 Hz and magnetic induction of 0.1-0.2 T.

Preferably, the method comprising subjecting the grain to the germinating process with oxygen access for 48 to 72 h.

Preferably, the method comprising carrying out the germinating process to obtain the germinated grain from 3 to 5 mm long, until an anabolic phase of the grain begins.

Preferably, the method comprising carrying out the germinating process without rotating the grain.

Preferably, the method comprising subjecting the germinated grain to the grinding process within 10 to 12 h after the germinating process is completed.

Preferably, the grinding process is carried out using three Enterprise Cutting System units connected in series.

Preferably, the grinding process is carried out using The Full Unger grinding system.

There is also presented a germinated grain being an intermediate product of the above-mentioned method.

There is further presented a paste being a product of the above-mentioned method.

According to the presented method, washed grain is subjected to a germination process and ground into a paste. In this method, the grain is washed with agents produced in situ, stratified with a variable magnetic field, germinated in 12 h cycles, ground, and in order to preserve its properties, frozen or dried.

The obtained paste with a high content of nutrients from the germinated grain may be a component used in the food industry, for example for the production of highly nutritious, whole-grain bread. Another example of use of the paste includes meat chops, in which the paste can serve as a source of nutrients, flavouring and filler. The paste can also be a component of functional beverages and homogenized milk products.

The present disclosure allows for obtaining at least some of the following technical advantages.

The presented method allows to increase the content of nutrients due to a much higher percentage of germinating grain being obtained compared to germination without stratification. Accordingly, the method provides the maximum amount of nutrients obtained in the germination process (which takes from 48h to 72h).

The method of the present disclosure allows for obtaining a paste with a composition adapted to the finished product through combining the grinding and mixing process of the germinated grain and of the other ingredients. During the grinding of the sprouts with additives, the active compounds contained in the sprouts are preserved.

In addition, the method of the present disclosure allows to reduce the content of undesirable impurities, bacteria and mould because of washing the grain with disinfectants produced in situ , disinfecting the grain with agents produced in situ that are unstable and quickly decompose into neutral compounds (H₂O, NaCI), and, in addition, the agents produced in situ do not affect multicellular organisms and do not remain in the final product.

The solution of the invention also allows for reducing adverse impact on the environment by reducing water consumption and optimizing the germination process time; recirculation and water purification in product technology; as well as the use of active disinfectants that are produced on the site of use (in situ), in a closed circuit, without waste.

In addition, the method of the invention allows for increasing the economic efficiency of the paste production because of the possibility of using wheat grain with a lower technological value, class K or C (instead of classes E, A and B) as well as because of reduced consumption of utilities and water, and also shortening of the production cycle.

### BRIEF DESCRIPTION OF DRAWINGS

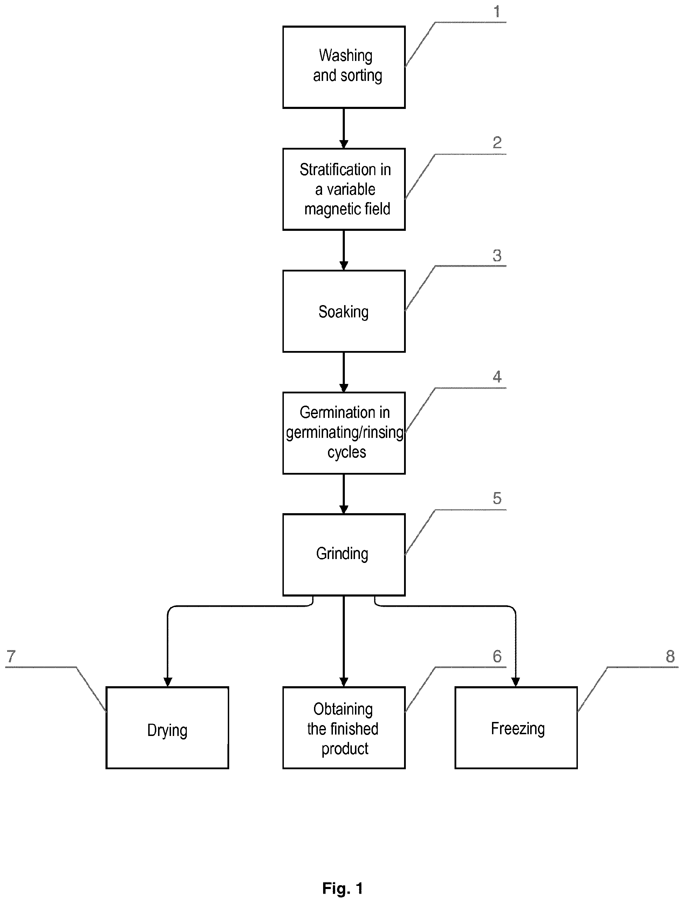

The method for producing a paste with high content of nutrients from germinated grain, according to the present disclosure, is illustrated by way of exemplary embodiments in the drawing, in which Fig. 1 is a diagram of the method for producing the paste according to the present invention.

### DETAILED DESCRIPTION

As shown in the diagram of Fig. 1, in step 1, grain is dispensed into a container in which the grain is cleaned and sorted. Contaminants and damaged or bad grains are removed from the grain. The grain is washed using disinfectants produced in situ.

In step 2, the purified grain is stratified in a variable magnetic field. Stratification increases the amount of grains that will germinate.

In step 3, the activated grain is soaked in water for 12 h. Soaking is designed to trigger the germination of the grain and to remove chemical impurities, if any. After the end of step 3, the soaked grain is directed to germination in step 4.

The germination step 4 takes place in repetitive, twelve-hour cycles. One cycle consists of 11.5 h of germination and 0.5 h of rinsing (i.e. soaking). The germination step 4 lasts from 48 to 72 h. In this step, vitamins and enzymes are produced in the germinating grain.

Next, in step 5, the germinated grain is ground with flavourings. A paste with a high content of nutrients from germinated grain is obtained.

In step 6, the finished product is achieved from the paste thus obtained in step 5. The paste can be prepared for long-term storage by drying in step 7 and / or freezing in step 8.

Detailed parameters of the individual steps are selected depending on the type of grain and the type of product prepared from the paste.

Preferably, in step 1 the grain is sorted in the flotation process and cleaned with agents produced in situ. Contaminants and damaged grain float on the surface from where they are collected and removed. After the sorting is over, the grain is rinsed with a biocidal agent (anolyte) produced in situ in the electrolysis process. The anolyte, due to the content of chloride radicals, chloric acid and oxygen radicals: atomic oxygen, ozone and hydrogen peroxide, has a disinfecting effect. Bacteria and molds present on the grain are removed, which significantly improves the microbiological quality.

Then the grain is soaked in a husk-softening solution - a catholyte. The catholyte is produced in situ in the same electrolysis process in which the anolyte is produced. The catholyte is an agent of high pH. Due to the high pH value, the grain husk softens, which facilitates the diffusion of water inside the grain and accelerates the initiation of the germination process. The catholyte comprises perhydroxyl radical, hydrogen polyoxide and sodium hydroxide.

The used agents, i.e. anolyte and catholyte, which are produced in situ, are very active only immediately after production, whereas after 12 h, they undergo decomposition to the neutral compounds: H₂O and NaCl. Due to the short lifespan of anolyte and catholyte, the cleaned grain contains no residual biocides. The anolyte and catholyte, after the end of step 1, are mixed together. The neutralization reaction yields an aqueous salt solution, which, after filtration, is re-used in the electrolysis process.

Preferably, in step 2, the cleaned grain, flowing through a pipe mounted inside a coil, is subjected to a variable magnetic field with a frequency in the range of 25-70 Hz and a magnetic induction of 0.1-0.2 T for a period of 0.1 to 7 s. The magnetic field affects the germination and subsequent development of plants by altering the course of some physiological and biochemical processes in the grain. Increased enzymatic activity of the grain stimulated by the magnetic field indicates a greater progress of the germination process compared to grain that was not subjected to the magnetic field. Stratification allows for reducing the percentage of non-germinating seed grains to a quite large extent, by as much as 15% to 5%, which resulted in increased amount of vitamins and amino acids and improved microbiological quality.

Preferably, in step 3, the activated grain is soaked for 12 h in water exposed to a variable magnetic field. The water exposed to a variable magnetic field has a reduced surface tension. The diffusion of water inside the grain is faster. Natural grain-impregnating substances, enzyme inhibitors and other protective substances are removed faster. In a typical germination method of cereal grains, grain is usually soaked for 24 h. The method of the invention allows to reduce the soaking time down to as much as 12 h.

Preferably, in step 4, consisting in cyclic germinating and soaking, the soaked grain germinates in a closed container with its bottom made of a mesh. The use of the mesh allows for draining very thoroughly the water after soaking and rinsing and for controlled air exchange. Thorough removal of water from the container prevents the formation of mold, which significantly improved the microbiological quality.

The container with germinating grain is closed from the top, and the air exchange occurs through the bottom. Germinating grain has access to oxygen, so that undesirable anaerobes are not generated. The grain in the container is not moved, unlike drum containers for malt germination. Cereal sprouts are not damaged and the germination process is carried out faster, by as much as 20%.

The germination time is 48 to 72 h, during which the highest content of nutrients and enzymes is obtained. Before the lapse of 48 h of growth, the sprouts do not contain a lot of nutrients. After 72 h, the anabolic phase begins: biochemical processes start in the sprouts in which toxic compounds (natural pesticides) are released.

The last rinsing of the germinated grain is carried out at least 10 h before grinding. Maintaining a 10-12 hour interval between rinsing and grinding ensures sprout moisture content that is optimal for the grinding process. By changing the duration of the interval between the last rinse and the grinding process, the moisture content of the paste is controlled. The minimum moisture content of the paste allows for removing from the recipe of the finished product flour and other ingredients that bind water. Adjustment of the moisture content of the sprouts allows for obtaining a paste with a determined, stable moisture content. Stable moisture content is the key quality parameter of the finished paste product.

In step 5, the sprouts are ground with additives according to the recipe of the finished product, preferably using grinding system of the type: 3 x Enterprise or Full Unger.

The grinding system of the type: 3 x Enterprise Cutting System consists of three Enterprise grinding machines connected in series. The Enterprise grinding machine is composed of one blade and one mesh. The paste obtained in the 3 x Enterprise system is homogeneous, all sprouts are very finely ground, but the grinding process itself is time-consuming and poorly efficient. Thus, the 3 x Enterprise system can be used for the production of small, i.e. up to 50 kg, batches of paste, which do not affect the production efficiency.

The Full Unger grinding system consists of one Unger grinding machine comprising two double-sided blades and three meshes. The Full Unger system grinds germinated grain very quickly, but it requires high engine power. The Full Unger system can be used for the production of medium and large batches of paste, i.e. above 50 kg.

Additives (flavours, raising agents, oils) are added during the grinding process. The grinding process ensures good distribution of additives across the paste. During the grinding of the sprouts, the largest amount of active compounds is released. The active compounds released from ground sprouts readily react with the additives to form stable compounds, or dissolve in fats. The active compounds are retained in the paste.

In the conventional grinding methods, the released active compounds are oxidized or evaporate, whereas the method according to the present disclosure increases the content of nutrients by up to 18%, retains the activity of enzymes and the maximum level of vitamins and amino acids. After combining the paste with the additives, a prefabricate is obtained which can be used to produce the final product. Thus, the operations of grinding the grain and mixing the components into the finished product have been combined, improving the quality of the process as a whole.

The method for producing a paste with high content of nutrients from germinated grain, according to the present disclosure, is characterized in that the paste contains all the additives needed to obtain a finished product from the paste. Thus, all parameters of the processes from steps 4 and 5 are selected to obtain the optimal product in step 6.

In step 6, the paste is processed into a finished product, the properties of which depend on the composition of the paste - the germinated grain and additives added during grinding in step 5. Step 6 comprises the formation of the finished product and its thermal treatment (if necessary). All the processes of addition and mixing of the necessary components are carried out previously in stages 4 and 5. This significantly increases the content of nutrients by 18% or more, as well as decreases the energy consumption by 15% or more.

Preferably, the paste made of germinated grain is dried in step 7 by vacuum pulse drying (step reduction of pressure during drying). In pulse drying, the moisture is removed from the material in the form of a mist (i.e. a dispersion of water in the air) rather than vapour. Pulse drying shortens the process of paste drying by as much as 40% to 50%, and it reduces energy consumption by as much as 30% to 40%. Pulse drying results in micropores with a developed surface forming in the paste. Micropores improve the quality of the paste, accelerating the process of hydration (rehydration) of the paste during further use. The dried granulated paste can be stored without significant loss of nutritional value for as long as over 5 years, i.e. much longer compared to grain or flour (usually 1-2 years).

Preferably, in step 8, the paste is frozen using cryogenic means. Freezing allows to retain the maximum amount of nutritional and organoleptic properties of the paste. Cryogenic freezing is energy-efficient, with relatively low agent consumption (due to the low heat of freezing) compared to air flow freezing. The frozen granulated paste can be stored without significant loss of nutritional value for as long as over 5 years, i.e. much longer compared to grain or flour (usually 1-2 years).

### Exemplary embodiments of the invention

### Example 1

A paste with a high content of nutrients from germinated grain was prepared - HW.001. The paste is especially useful for the production of bread rolls.

The following were used for preparing a paste from germinated grain:
Anolyte - anodic liquid, obtained in the process of electrolysis of an aqueous solution of sodium chloride with a concentration of 1%, ORP 700 mV Catholyte - cathodic liquid, obtained in the process of electrolysis of an aqueous solution of sodium chloride with a concentration of 1%, ORP -400 mV
3 x Enterprise grinding system - three grinding units connected in series; the units are composed of one blade and one sieve, a sieve with a mesh size of 5 mm was mounted in unit 1, a sieve with a mesh size of 4 mm was mounted in unit 2 and a sieve with a mesh size of 3 mm was mounted in unit 3.

Plastic tank with a volume of 2L with a cover made of mesh.

The method was carried out as follows.
Step 1. 0.7 kg of class C wheat grain was distributed into a 2L plastic tank in which cleaning and sorting were carried out. 1 kg of clean water was added. The content of the tank was subjected to flotation with compressed air. Contaminants and damaged grains floating on the surface were collected and removed. After sorting is over, the grain was rinsed with a biocide produced in situ: an anolyte solution with the concentration of 0.15%. 1 kg of the solution was poured onto the grain, soaked for 3 minutes, after which the solution was removed. The grain was then soaked in a husk-softening solution: a catholyte solution with the concentration of 0.15%. 1 kg of the solution was poured onto the grain, soaked for 15 minutes, and the solution was removed.
Step 2. Subsequently, the cleaned grain was stratified by variable magnetic field. 1 kg of water was poured onto the cleaned grain. The grain together with water was moved to another tank through a pipe arranged inside a coil, which generates variable magnetic field with a frequency of 50 Hz and magnetic induction of 0.12 T. The grain was exposed to the magnetic field for 2 s.
Step 3. The activated grain was soaked for 12 h in water exposed to variable magnetic field. After 12 h, the tank was turned upside down and the water was removed.
Step 4. The soaked grain was left in the tank turned upside down to germinate for 11.5 h. The tank was then turned upside down and 1 kg water was poured in. After 0.5 h of soaking, the tank was turned upside down and the water was removed. Germination was carried out in the temperature of 20°C. Germs emerged after 14 h. The germination step 4 lasted 60 h. After this time, sprouts grew 3 to 5 mm in length. The germination cycle was repeated 5 times. Soaking was excluded from the fifth, last cycle. 1.1 kg of germinated wheat was obtained.

Percentage and weight calculations were performed for a 1.2 kg batch.
Step 5. Germinated wheat was ground together with additives using the 3 x Enterprise grinding unit. During the grinding, 0.012 kg (0.99 wt%) of cooking salt, 0.02 kg of sunflower oil (2 wt%), 0.03 kg (2.5 wt%) of lemon pulp, 0.015 kg (5 wt%) honey, 0.001 kg (0.1 wt%) ground cinnamon and 0.02 kg (1.5 wt%) baking powder were added. The germinated grain yielded 1.2 kg of finished paste. The paste was divided into 3 parts:
Step 6. 0.6 kg of the paste was used to form 5 bread rolls weighing 0.12 kg. The bread rolls were baked in the temperature of 160°C for 50 minutes.
Step 7. 0.3 kg of the paste was dried using the method of pulse vacuum drying until its moisture content was 12%.
Step 8. 0.3 kg of the paste was frozen to a temperature of -22 to -28°C using liquid nitrogen.

For comparison, 8 tests were performed to produce a reference paste made of germinated grain using the same method as above, without grain disinfection, stratification and soaking in water following treatment with a magnetic field. The same grain type was used for all the tests. 3 tests failed: the grain became mouldy after 12 h of germination. During 2 tests, the germination started only after 36 h, so that the optimum nutritive value of the paste was not achieved after 72 hours of germination. During the last 3 tests, up to 0.95 kg of wheat germs was obtained. The resultant germinated grain was used to prepare a paste for the production of bread rolls.

Then, the content of substantial nutrients was compared in the bread roll produced according to the method of the present disclosure and the bread roll made of a paste prepared using an analogous method. A higher content of nutrients was found in the bread roll made using the method of the present disclosure. The content of amino acids increased by 97%, the content of vitamins A, D and E - by 106% on average. The content of fats and carbohydrates was similar.

### Example 2

A paste with a high content of nutrients from germinated grain was prepared - HW.002. The paste is especially useful for the production of meat chops.

Steps 1-4 were performed as in Example 1.

Step 5. 0.3 kg (32 wt%) of the germinated wheat was ground together with 0.6 kg of chicken meat using the Full Unger grinding unit. The following additives were added during the grinding: 0.033 kg (3 wt.%) of cooking salt, 0.022 kg of sunflower oil (2 wt.%), 0.004 kg (0.4 wt.%) of flavouring spices. 1 kg of finished meat mass with germinated grain was obtained.

Step 6. 16 chops weighing approximately 0.06 kg were formed using the mass. The chops were fried in oil, 3 minutes each side.

### Example 3

A paste with a high content of nutrients from germinated grain was prepared - HW.003. The paste is especially useful for the production of beverages.

Steps 1-4 were performed as in Example I.

Step 5. 1 kg (10 wt%) of the germinated wheat was ground together with additives using the 3 x Enterprise grinding unit. During grinding, 0.02 kg (0.2 wt%) of lemon pulp and 0.002 kg (0.02 wt%) of cooking salt were added. The finished paste of germinated grain was distributed in 9 kg of water (90 wt%). The beverage was left for 24 h at 25°C. Afterwards, the beverage was filtered. 9 kg of functional beverage were obtained.

## Claims

1. A method for producing a paste from a germinated grain, **characterized in that** the method comprises the steps of:
- washing a grain with washing agents produced in situ,
- activating the grain in a stratification process carried out in a variable magnetic field,
- soaking the grain in water,
- subjecting the grain to a germinating process carried out in cycles, wherein the cycle comprises germinating the grain at rest on a mesh and soaking the grain, to obtain the germinated grain, and
- grinding the germinated grain with at least one additive selected from the group consisting of flavouring agents and rheology-enhancing agents, to obtain the paste.

2. The method according to claim 1, further comprising drying the paste, preferably using pulse drying.

3. The method according to any of the preceding claims, wherein the washing agents produced in situ undergo decomposition to neutral compounds.

4. The method according to any of the preceding claims, further comprising, during the washing process, rinsing the grain with an anolyte being a biocidal agent, and next soaking the grain in a catholite being a husk-softening solution.

5. The method according to any of the preceding claims, comprising carrying out the stratification process for 0.1 to 7 s in a variable magnetic field with a frequency in the range of 25-70 Hz and magnetic induction of 0.1-0.2 T.

6. The method according to any of the preceding claims, comprising subjecting the grain to the germinating process with oxygen access for 48 to 72 h.

7. The method according to any of the preceding claims, comprising carrying out the germinating process to obtain the germinated grain from 3 to 5 mm long, until an anabolic phase of the grain begins.

8. The method according to any of the preceding claims, comprising carrying out the germinating process without rotating the grain.

9. The method according to any of the preceding claims, comprising subjecting the germinated grain to the grinding process within 10 to 12 h after the germinating process is completed.

10. The method according to any of the preceding claims, wherein the grinding process is carried out using three Enterprise Cutting System units connected in series.

11. The method according to any of the preceding claims, wherein the grinding process is carried out using The Full Unger grinding system.

12. A germinated grain being an intermediate product of the method according to any of the claims from 1 to 11.

13. A paste being a product of the method according to any of the claims from 1 to 11.
